(19) **Europäisches Patentamt**
**European Patent Office**
**Office européen des brevets**

(11) **EP 4 665 017 A1**

(12) **EUROPEAN PATENT APPLICATION**
published in accordance with Art. 153(4) EPC

(43) Date of publication:
**17.12.2025 Bulletin 2025/51**

(21) Application number: **24762914.0**

(22) Date of filing: **24.01.2024**

(51) International Patent Classification (IPC):
**H04W 56/00** $^{(2009.01)}$    **H04J 3/06** $^{(2006.01)}$

(52) Cooperative Patent Classification (CPC):
**H04J 3/06; H04W 56/00**

(86) International application number:
**PCT/CN2024/073814**

(87) International publication number:
**WO 2024/179231 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 CN 202310217122**

(71) Applicant: **Huawei Technologies Co., Ltd.
Shenzhen, Guangdong 518129 (CN)**

(72) Inventors:
• **ZHUANG, Guanhua**
  **Shenzhen, Guangdong 518129 (CN)**
• **LI, Yizhou**
  **Shenzhen, Guangdong 518129 (CN)**
• **YUAN, Yuan**
  **Shenzhen, Guangdong 518129 (CN)**
• **LI, Jiang**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CLOCK SYNCHRONIZATION METHOD AND DEVICE**

(57) Embodiments of this application provide a clock synchronization method and an apparatus. The clock synchronization method is applied to a slave node. The clock synchronization method includes: receiving a synchronization packet sent by a master node, where the synchronization packet carries a master clock timestamp of the master node; establishing a mapping relationship between a master clock of the master node and a reference timescale of the slave node based on the master clock timestamp and a timestamp corresponding to a reference timescale of the slave node when the slave node receives the synchronization packet; obtaining a time combination of the timestamp corresponding to the reference timescale of the slave node and slave clock time of the slave node, where a collection moment of the reference timescale of the slave node and a collection moment of the slave clock time corresponding to the reference timescale are the same; and determining a compensation parameter based on the mapping relationship and the time combination, to perform clock synchronization between the slave node and the master node based on the compensation parameter. In this application, the slave clock time of the slave node is compensated by using the compensation parameter, to ensure that a time offset between the master node and the slave node is bounded.

FIG. 7

**Description**

This application claims priority to Chinese Patent Application No. 202310217122.5, filed with the China National Intellectual Property Administration on February 28, 2023 and entitled "CLOCK SYNCHRONIZATION METHOD AND APPARATUS", which is incorporated herein by reference in its entirety.

TECHNICAL FIELD

This application relates to the field of communication technologies, and in particular, to a clock synchronization method and an apparatus.

BACKGROUND

In a communication system, some electronic devices have clock synchronization requirements, and network timing may be implemented by using different synchronization technologies. Clock synchronization can be implemented in a network by using time, frequencies, and phases. The frequency refers to a quantity of times for which energy completely oscillates in a form of waves per second or a rate at which a periodic event occurs. Frequency synchronization is a capability of allocating accurate frequencies around the network. The phase refers to a fraction of a periodicity of a periodicity amount that has been completed at specific reference time, and is expressed in an angle. In phase synchronization, a plurality of clocks with different frequencies are phase-synchronized. Time refers to time in a day. Time synchronization refers to time distribution of clocks across networks. Time synchronization is a manner of implementing phase synchronization.

Costs of using a receiver of a global navigation satellite system (GNSS) such as a global positioning system (GPS) to implement time/phase synchronization are very high. Therefore, two protocols for providing frequency synchronization through an Ethernet interface are defined, which may be implemented in any one of the following manners. Synchronous ethernet (SyncE) is a physical layer technology supporting frequency transmission from one hop to another hop, where an external source, for example, a network clock, can be traced, and allocation is synchronous at a physical layer. The SyncE operates at the physical layer. Therefore, all Ethernet devices on a synchronization path need to support the SyncE. In addition, the SyncE can provide stable frequency synchronization, but cannot provide time or phase synchronization. An independent protocol is needed for delivery of the time or phase synchronization. A packet-based frequency synchronization method depends on transmission of dedicated "event packets". These "event packets" form a large quantity of instantaneous moments of a packet time signal. Time of the large quantity of instantaneous moments is encoded in a form of a time marker at a packet master clock and then transferred to a packet slave clock over a packet network. Because time is an integral of a frequency, the frequency can be recovered by using a time marker.

A packet network-based frequency synchronization method described in ITU-T G.8263 is essentially a frequency locking method. The method aims to maintain a frequency offset between the packet slave clock and the packet master clock within a specific range. However, the synchronization method cannot ensure that a time offset between the packet slave clock and the packet master clock is bounded.

SUMMARY

In view of the foregoing content, it is necessary to provide a clock synchronization method and an apparatus. A compensation parameter is determined based on a mapping relationship between a master clock of a master node and a reference timescale of a slave node, and a time combination of a timestamp and slave clock time that correspond to the reference timescale of the slave node at a same moment, and clock synchronization between the slave node and the master node is implemented based on the compensation parameter, to ensure that a time offset between the master node and the slave node is bounded.

According to a first aspect, an embodiment of this application provides a clock synchronization method. The clock synchronization method is applied to a slave node, and the clock synchronization method includes: receiving a synchronization packet sent by a master node, where the synchronization packet carries a master clock timestamp of the master node; establishing a mapping relationship between a master clock of the master node and a reference timescale of the slave node based on the master clock timestamp and a timestamp corresponding to a reference timescale of the slave node when the slave node receives the synchronization packet; obtaining a time combination of the timestamp corresponding to the reference timescale of the slave node and slave clock time of the slave node, where a collection moment of the reference timescale of the slave node and a collection moment of the slave clock time corresponding to the reference timescale are the same; and determining a compensation parameter based on the mapping relationship and the time combination, to perform clock synchronization between the slave node and the master node based on the compensation parameter.

According to the foregoing technical solution, the compensation parameter is determined based on the mapping relationship between the master clock of the master node and the reference timescale of the slave node, and the time combination of the timestamp corresponding to the reference timescale of the slave node and the slave clock time of the slave node, and compensation is performed for a reference slave clock of the slave node based on the compensation parameter, to implement clock synchronization between the slave node and the master node.

Further, the compensation parameter and the mapping relationship may be executed by a component having a strong calculation capability, such as a CPU, in the slave node. This facilitates calculation of soft clock time offset compensation in a network programmable component such as a CPU, a network device NP (Network Processor), or an FPGA, without depending on a clock hardware circuit of the slave node.

Synchronization packets sent between the master node and the slave node are periodically and continuously sent. The slave node may perform statistical calculation (for example, perform statistical calculation by using a preset statistical algorithm) on timestamps in a plurality of received synchronization packets and corresponding timestamps when the slave node receives the synchronization packets, to determine the mapping relationship between the master clock and the reference timescale of the slave node.

The timestamp corresponding to the reference timescale of the slave node is clock time of the slave node, and the slave clock time of the slave node is application time output after clock synchronization is performed between the slave node and the master node. The application time is output time determined through correction by the slave node based on reference time, that is, application time of the slave node.

Based on the first aspect, in a possible implementation, the compensation parameter includes a time compensation parameter, and determining the compensation parameter based on the mapping relationship and the time combination includes: determining, based on the mapping relationship and a time combination corresponding to a specific moment, an initial time offset that is between the master node and the slave node and that corresponds to the specific moment; and determining the time compensation parameter based on the mapping relationship, the time combination, and the initial time offset.

According to the foregoing technical solution, the initial time offset is determined, and a time offset between the master node and the slave node, that is, the time compensation parameter, is determined based on the initial time offset, to ensure that a time offset is bounded when clock synchronization is performed between the slave node and the master node.

Further, in a process of determining the time compensation parameter, an initial frequency offset between the master node and the slave node is locked, to improve accuracy of clock synchronization.

Based on the first aspect, in a possible implementation, the compensation parameter further includes a frequency offset compensation parameter, and the clock synchronization method further includes: determining, based on the mapping relationship and the time combination, a frequency compensation parameter between the master node and the slave node within a preset frequency compensation periodicity interval.

According to the foregoing technical solution, after time compensation is performed on the slave node, frequency compensation is periodically performed on the slave node, to implement clock synchronization between the slave node and the master node, and improve accuracy of clock synchronization between the slave node and the master node.

Based on the first aspect, in a possible implementation, the mapping relationship between the master clock of the master node and the reference timescale of the slave node is $T_1(t)=a+b*T_2(t)$. $T_1(t)$ is a timestamp that is of the master node at a moment t and that is carried in the synchronization packet, $T_2(t)$ is a timestamp corresponding to a reference timescale of the slave node at the moment t, a is a time offset parameter, and b is a frequency offset parameter. The initial time offset that is between the master node and the slave node, corresponds to the specific moment, and is determined based on the mapping relationship and the time combination corresponding to the specific moment is: $initialOffset=a(0)+b(0)*T_{2n}(0)-T_b(0)$.

initial Offset is an initial time offset between the master node and the slave node at an initial moment, $T_{2n}(0)$ is a timestamp corresponding to a reference timescale of the slave node at the initial moment, $T_b(0)$ is slave clock time of the slave node at the initial moment, $a(0)$ is a time offset parameter at the initial moment, and $b(0)$ is a frequency offset parameter at the initial moment.

The time compensation parameter determined based on the mapping relationship, the time combination, and the initial time offset is: $Offset=T_1(t)-T_b(t)-initialOffset$, where $T_1(t)=a+*T_{2n}(t)$.

Offset is the time compensation parameter, $T_b(t)$ is slave clock time of the slave node at the moment t, and $T_{2n}(t)$ is the timestamp corresponding to the reference timescale of the slave node at the moment t.

According to the foregoing technical solution, the mapping relationship between the master clock of the master node and the reference timescale of the slave node is a simple regression function, and the time compensation parameter is calculated based on the mapping relationship, so that performance of clock synchronization between the slave node and the master node can be greatly improved.

Based on the first aspect, in a possible implementation, the frequency compensation parameter that is between the master node and the slave node, corresponds to the compensation periodicity interval, and is determined based on the mapping relationship and the time combination is: freqComp=(b-1)*C. freqComp is the frequency compensation parameter, and C is the compensation periodicity interval.

According to the foregoing technical solution, the frequency compensation parameter within the compensation periodicity interval is determined based on the mapping relationship, and the reference time of the slave node is compensated based on the time compensation parameter and the frequency compensation parameter, to ensure the performance of clock synchronization of the slave node.

Based on the first aspect, in a possible implementation, establishing the mapping relationship between the master clock timestamp of the master node and the reference timescale of the slave node includes: constructing an original point set based on a plurality of master clock timestamps of the master node and timestamps corresponding to reference timescales of the slave node; determining a minimum point in the original point set; determining a selected point in a selected point set based on the minimum point; and determining the mapping relationship between the master clock of the master node and the reference timescale of the slave node based on the selected point set.

According to the foregoing technical solution, the selected point is determined by using a minimum point algorithm, and the mapping relationship is determined based on the selected point. The minimum point may be a point with a minimum packet delay when there is a packet delay variation (PDV, Packet Delay Variation).

Based on the first aspect, in a possible implementation, the clock synchronization method further includes: determining an outlier point set based on the minimum point, where a jitter between a master clock timestamp of the master node and a reference timescale of the slave node in the outlier point set exceeds a preset jitter range; and determining, based on the outlier point set, that route change occurs on a path between the master node and the slave node, and updating the selected point set based on the outlier point set.

According to the foregoing technical solution, when it is determined that an outlier point is caused by route change, the outlier point in the outlier point set may be used as a new selected point, to increase a quantity of selected points and improve accuracy and timeliness of maintaining the mapping relationship. In this way, when an inherent delay in a transmission delay of the synchronization packet changes, the change can be identified and compensation may be performed, thereby effectively reducing a jitter of slave clock output time of the slave node.

Based on the first aspect, in a possible implementation, determining, based on the outlier point set, that route change occurs on the path between the master node and the slave node includes: if a minimum point in the outlier point set meets the following route change conditions, determining that route change occurs on the path between the master node and the slave node: a route change condition 1: a quantity of minimum points in the outlier point set being greater than a preset quantity threshold; and a route change condition 2: a jitter of the minimum point in the outlier point set being within a preset jitter range.

According to the foregoing technical solution, whether the minimum point in the outlier point set meets the changing condition is determined by using the foregoing determining conditions. If the minimum point meets the changing condition, the minimum point in the outlier point set is used as a new selected point. A quantity of selected points is increased, to improve accuracy and timeliness of maintaining the mapping relationship. Without an external notification, the slave node can detect, based on the timestamp carried in the synchronization packet from the master node and the timestamp corresponding to the reference timescale of the slave node, a change of an inherent delay of a packet in a packet switched network caused by a scenario such as route change.

Based on the first aspect, in a possible implementation, the route change conditions further include: a route change condition 3: a difference between an inherent delay at the selected point in the selected point set and an inherent delay at the outlier point in the outlier point set being greater than a preset distance range.

The route change condition 3 is used to avoid mistakenly determining, as a route change outlier point, a non-route change outlier point caused by an ambient temperature change or the like.

Based on the first aspect, in a possible implementation, a method for determining the difference between the inherent delays includes: determining an average value of all selected points in the selected point set to obtain a first average point; determining an average value of all outlier points in the outlier point set to obtain a second average point; determining a frequency offset calculation parameter based on the selected point in the selected point set and the outlier point in the outlier point set; and determining the difference between the inherent delays according to the following formula: deltaOffsetCausedByRouteChange=-(T1outlier-T1selected)+(T2outlier-T2selected)*b_routechange. deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point.

According to the foregoing technical solution, it is determined that route change occurs in a transmission process of the synchronization packet, and then delay compensation caused by route change is determined. Compensation for a transmission delay increment caused by route change is performed by using the difference between the inherent delays, to ensure boundedness of clock synchronization between the slave node and the master node. In conventional technologies, when inherent delays of synchronization packets change, most of the changes cannot be sensed, which causes great jitters of a slave clock frequency and slave clock time of the slave node, and long re-convergence time usually exists. In this application, historical minimum point sequences after route change are stored in the outlier point set, and seamless changing can be implemented by switching these historical minimum point sequences to the selected point set, thereby effectively reducing frequency and time jitters of a packet slave clock of the slave node, and avoiding packet slave clock algorithm flapping and re-convergence of the slave node.

Based on the first aspect, in a possible implementation, determining the frequency offset calculation parameter based on the selected point in the selected point set and the outlier point in the outlier point set includes: obtaining a first mapping relationship corresponding to all the selected points in the selected point set and a second mapping relationship corresponding to all the outlier points in the outlier point set; and determining the frequency offset calculation parameter based on the first mapping relationship and the second mapping relationship.

According to the foregoing technical solution, the frequency offset parameter is determined by selecting a mapping relationship corresponding to a set with a smaller jitter, to improve accuracy of calculating the difference between the inherent delays.

Based on the first aspect, in a possible implementation, determining the frequency offset parameter based on the selected point in the selected point set and the outlier point in the outlier point set includes: obtaining a first jitter range of the selected point in the selected point set and a second jitter range of the outlier point in the outlier point set; and determining a mapping relationship of a set corresponding to a smaller jitter in the first jitter range and the second jitter range, to determine the frequency offset calculation parameter. According to the foregoing technical solution, the frequency offset calculation parameter is determined by selecting an average value of mapping relationships corresponding to an amount set, to improve accuracy of calculating the difference between the inherent delays.

Based on the first aspect, in a possible implementation, the synchronization packet sent by the master node is received over the packet switched network.

According to a second aspect, a slave node is provided. The slave node includes a reference timescale module, a packet timestamp module, a statistics module, a packet slave clock correction module, and a compensation calculation module. The packet timestamp module is configured to receive a synchronization packet sent by a master node, where the synchronization packet carries a master clock timestamp of the master node, and is further configured to receive a timestamp that corresponds to a reference timescale of the slave node when the slave node receives the synchronization packet and that is sent by the reference timescale module, and send the master clock timestamp of the master node and the timestamp corresponding to the reference timescale of the slave node to the statistics module. The statistics module is configured to: receive the master clock timestamp of the master node and the timestamp corresponding to the reference timescale of the slave node; establish a mapping relationship between a master clock of the master node and the reference timescale of the slave node; and then send the mapping relationship to the compensation calculation module. The compensation calculation module is configured to receive the mapping relationship, and is further configured to receive a notification message sent by the packet slave clock correction module, where the notification message carries a time combination of the timestamp corresponding to the reference timescale of the slave node and slave clock time of the slave node, and a collection moment of the timestamp corresponding to the reference timescale of the slave node and a collection moment of the slave clock time corresponding to the reference timescale are the same. The compensation calculation module is further configured to: determine a compensation parameter based on the mapping relationship and the time combination; and send the compensation parameter to the packet slave clock correction module, for the packet slave clock correction module to perform clock synchronization of the slave node based on the compensation parameter.

Based on the second aspect, in a possible implementation, the compensation parameter includes a time compensation parameter. The compensation calculation module is further configured to: determine, based on the mapping relationship and a time combination corresponding to a specific moment, an initial time offset that is between the master node and the slave node and that corresponds to the specific moment; and determine the time compensation parameter based on the mapping relationship, the time combination, and the initial time offset.

Based on the second aspect, in a possible implementation, the compensation parameter further includes a frequency offset compensation parameter. The compensation calculation module is further configured to: determine, based on the mapping relationship and the time combination, a frequency compensation parameter between the master node and the slave node within a preset frequency compensation periodicity interval.

Based on the second aspect, in a possible implementation, the mapping relationship is: $T1(t)=a+b*T2(t)$. $T1(t)$ is a timestamp that is of the master node at a moment $t$ and that is carried in the synchronization packet, $T2(t)$ is a timestamp corresponding to a reference timescale of the slave node at the moment $t$, $a$ is a time offset parameter, and $b$ is a frequency offset parameter. The compensation calculation module is further configured to: determine, based on the mapping relationship and the time combination corresponding to the specific moment, that the initial time offset that is between the master node and the slave node and that corresponds to the specific moment is: $initialOffset=a(0)+b(0)*T2n(0)-Tb(0)$. initial Offset is an initial time offset between the master node and the slave node at an initial moment, $T2n(0)$ is a timestamp corresponding to a reference timescale of the slave node at the initial moment, $Tb(0)$ is slave clock time of the slave node at the initial moment, $a(0)$ is a time offset parameter at the initial moment, and $b(0)$ is a frequency offset parameter at the initial moment.

The time compensation parameter determined based on the mapping relationship, the time combination, and the initial time offset is:

$$Offset = T1(t) - Tb(t) - initialOffset,$$

where

$$T1(t) = a + b*T2n(t).$$

Offset is the time compensation parameter, Tb(t) is slave clock time of the node at the moment t, and T2n(t) is the reference timescale of the slave node at the moment t.

Based on the second aspect, in a possible implementation, the compensation calculation module is further configured to: determine, based on the mapping relationship and the time combination, that the frequency compensation parameter that is between the master node and the slave node and that corresponds to the compensation periodicity interval is freqComp=(b-1)*C. freqComp is the frequency compensation parameter, and C is the compensation periodicity interval.

Based on the second aspect, in a possible implementation, the statistics module is further configured to: construct an original point set based on a plurality of master clock timestamps of the master node and timestamps corresponding to reference timescales of the slave node; determine a minimum point in the original point set; determine a selected point in a selected point set based on the minimum point; and determine the mapping relationship between the master clock of the master node and the reference timescale of the slave node based on the selected point set.

Based on the second aspect, in a possible implementation, the statistics module is further configured to: determine an outlier point set based on the minimum point, where a jitter between a master clock timestamp of the master node and a timestamp corresponding to a reference timescale of the slave node in the outlier point set exceeds a preset jitter range; and determine, based on the outlier point set, that route change occurs on a path between the master node and the slave node, and update the selected point set based on the outlier point set.

Based on the second aspect, in a possible implementation, the statistics module is further configured to: if a minimum point in the outlier point set meets the following route change conditions, determine that route change occurs on the path between the master node and the slave node: a route change condition 1: a quantity of minimum points in the outlier point set being greater than a preset quantity threshold; and a route change condition 2: a jitter of the minimum point in the outlier point set being within a preset jitter range.

Based on the second aspect, in a possible implementation, the route change conditions further include: a route change condition 3: a difference between an inherent delay at the selected point in the selected point set and an inherent delay at the outlier point in the outlier point set being greater than a preset delay range.

Based on the second aspect, in a possible implementation, the statistics module is further configured to: determine an average value of all selected points in the selected point set to obtain a first average point; determine an average value of all outlier points in the outlier point set to obtain a second average point; determine a frequency offset calculation parameter based on the selected point in the selected point set and the outlier point in the outlier point set; and determine the difference between the inherent delays according to the following formula: deltaOffsetCausedByRouteChange=-(T1outlier-T1selected)+(T2outlier-T2selected)*b_routechange. deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point.

Based on the second aspect, in a possible implementation, determining the frequency offset parameter based on the selected point in the selected point set and the outlier point in the outlier point set includes: obtaining a first mapping relationship corresponding to all the selected points in the selected point set and a second mapping relationship corresponding to all the outlier points in the outlier point set; and determining the frequency offset calculation parameter based on the first mapping relationship and the second mapping relationship.

Based on the second aspect, in a possible implementation, determining the frequency offset calculation parameter based on the selected point in the selected point set and the outlier point in the outlier point set includes: obtaining a first jitter range of the selected point in the selected point set and a second jitter range of the outlier point in the outlier point set; and determining a mapping relationship of a set corresponding to a smaller jitter in the first jitter range and the second jitter range, to determine the frequency offset calculation parameter.

Based on the second aspect, in a possible implementation, the packet timestamp module is configured to receive, over a packet switched network, the synchronization packet sent by the master node.

According to a third aspect, a slave node is provided. The slave node includes one or more processors and a storage apparatus configured to store one or more programs. When the one or more programs are executed by the one or more processors, the one or more processors are enabled to implement the clock synchronization method according to any one of the implementations of the first aspect.

According to a fourth aspect, a computer-readable storage medium is provided. The computer-readable storage medium stores a computer program. When the program is executed by a processor, the clock synchronization method according to any one of the implementations of the first aspect is implemented.

It should be understood that, for technical effects of any one of the designs of the second aspect to the fourth aspect, refer to the beneficial effects in the corresponding method provided above. Details are not described herein again.

BRIEF DESCRIPTION OF DRAWINGS

FIG. 1 is a diagram of a clock synchronization architecture according to an embodiment of this application;
FIG. 2 is a diagram of an architecture for calculating compensation parameters according to an embodiment of this application;
FIG. 3 is a diagram of an architecture for determining a mapping relationship according to an embodiment of this application;
FIG. 4 is a diagram of a transmission delay of a synchronization packet according to an embodiment of this application;
FIG. 5 is a diagram of a scenario of route change occurring in a synchronization packet according to an embodiment of this application;
FIG. 6 is a diagram of a scenario of congestion occurring in a synchronization packet according to an embodiment of this application;
FIG. 7 is a schematic flowchart of a clock synchronization method according to an embodiment of this application; and
FIG. 8 is a diagram of a structure of a slave node according to an embodiment of this application.

DESCRIPTION OF EMBODIMENTS

The terms "first" and "second" mentioned below are used merely for the purpose of description, and shall not be understood as indicating or implying relative importance or implying a quantity of indicated technical features. Therefore, features defined by "first" and "second" may explicitly or implicitly include one or more such features. In the descriptions of embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. To be precise, use of the terms like "example" or "for example" is intended to present a relative concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that, in this application, unless otherwise specified, "a plurality of" means two or more, and "and/or" includes any or all combinations of one or more of associated listed items.

For ease of understanding, the following describes technical solutions in embodiments of this application with reference to the accompanying drawings.

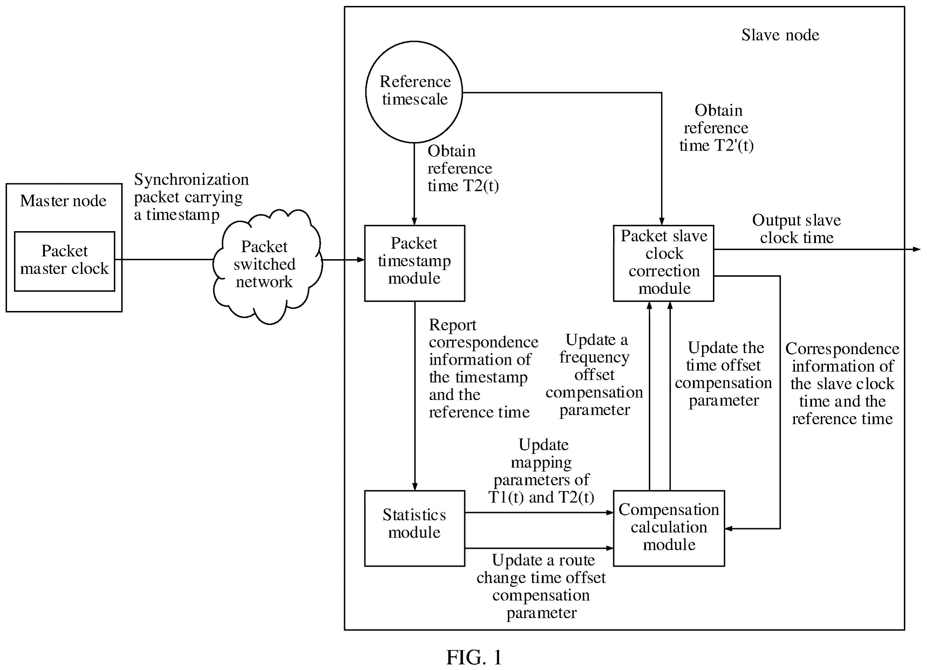

FIG. 1 is a diagram of a clock synchronization architecture according to an embodiment of this application. As shown in FIG. 1, the clock synchronization architecture includes a master node and a slave node. The master node sends a synchronization packet carrying a packet master clock timestamp $T1(t)$ to the slave node over a packet switched network. $t$ identifies that the packet master clock timestamp of the master node or a timestamp corresponding to a reference timescale is a sampling value at a moment $t$, or is calculated based on a sampling value at a moment $t$. In this way, in a process of synchronization between the slave node and the master node, the master node periodically and unidirectionally sends synchronization packets to the slave node, and the slave node does not need to return a response packet of the synchronization packet to the master node, in other words, clock synchronization between the slave node and the master node is implemented based on the synchronization packet unidirectionally sent by the master node to the slave node. The packet master clock timestamp $T1(t)$ is also referred to as a timestamp of a packet master clock of the master node or master packet device time.

It may be understood that the master node has a master clock, and the slave node has a slave clock. Usually, there is a frequency or time offset between the master clock and the slave clock, and a clock synchronization technology may be used to implement clock synchronization between the master node and the slave node. However, an existing clock synchronization technology, for example, using a frequency synchronization method defined in ITU-T G.8263, cannot ensure that a time offset between the master node and the slave node after synchronization is bounded.

To resolve a technical problem that the existing clock synchronization method cannot ensure that the time offset between the master node and the slave node is bounded, in the clock synchronization architecture provided in this embodiment of this application, a compensation parameter is determined based on a mapping relationship between a master clock timestamp of the master node and a timestamp corresponding to a reference timescale of the slave node, and a time combination of a timestamp corresponding to a reference timescale of the slave node and slave clock time corresponding to the timestamp at a same moment, and clock synchronization between the slave node and the master node is implemented based on the compensation parameter, to ensure that a time offset between the master node and the slave node is bounded.

The following provides descriptions with reference to the master node and a plurality of modules of the slave node in FIG. 1. As shown in FIG. 1, the slave node includes a packet timestamp module, a reference timescale, a statistics module, a compensation calculation module, and a packet slave clock correction module. It may be understood that the plurality of modules of the slave node may be partially or completely combined, and each module may be split based on its own functions.

In some embodiments, the slave node in FIG. 1 may be a packet network device, for example, a gateway, a switch, a router, a PC, a server, a terminal-side module including a packet network module, an executor including a packet network module, a controller, a sensor, or a network module.

The synchronization packet sent by the master node to the slave node may be a 1588 Sync packet or an NTP packet. It may be understood that, in another embodiment, the synchronization packet between the master node and the slave node may alternatively be of another type. This is not limited in this application.

In FIG. 1, a specific packet delay variation (Packet Delay Variation, PDV) is introduced in a process in which the master node sends the synchronization packet to the slave node over the packet switched network (Packet Switched Network), where the packet delay variation is also referred to as a delay jitter.

It may be understood that, in this embodiment of this application, an example in which the master node sends the synchronization packet to the slave node over the packet switched network is used for description. In another embodiment, the master node may send the synchronization packet to the slave node over another communication network. Because a delay variation is introduced during transmission of the synchronization packet in the communication network, delay variations in different communication networks are different.

In some embodiments, one or more relay nodes may be included between the master node and the slave node, and the master node sends the synchronization packet to the slave node via the relay node.

The reference timescale is configured to provide the reference timescale (Reference Timescale) of the slave node, and then provide timestamps corresponding to the reference timescale for the packet timestamp module and the packet slave clock correction module.

For example, the timestamp corresponding to the reference timescale provided for the timestamp module is T2(t), and the timestamp corresponding to the reference timescale provided for the packet slave clock correction module is T2'(t).

The timestamp corresponding to the reference timescale may be provided by a local clock of the slave node, for example, a network adapter clock or a CPU clock.

The packet timestamp module is configured to receive the synchronization packet sent by the master node, and is further configured to receive the timestamp corresponding to the reference timescale of the slave node sent by the reference timescale, and then send the master clock timestamp of the master node and the reference timescale of the slave node to the statistics module. The timestamp corresponding to the reference timescale of the slave node is time corresponding to a reference timescale of the slave node when the slave node receives the synchronization packet sent by the master node.

It may be understood that the packet timestamp module may form a 2-tuple of the master clock timestamp of the master node and the timestamp that corresponds to the reference timescale of the slave node and that corresponds to the master clock timestamp of the master node, and send the 2-tuple to the statistics module. It is clear that, in another embodiment, the packet timestamp module may determine a difference between the master clock timestamp of the master node and the timestamp that corresponds to the reference timescale of the slave node and that corresponds to the master clock timestamp of the master node, and send the difference to the statistics module.

That the master clock timestamp of the master node corresponds to the timestamp corresponding to the reference timescale of the slave node means that the two timestamps are collected at a same moment. The collection moment herein may be a moment at which the slave node receives the synchronization packet sent by the master node.

The statistics module is configured to receive the master clock timestamp of the master node and the timestamp corresponding to the reference timescale of the slave node that are sent by the packet timestamp module, determine the mapping relationship between the master clock timestamp of the master node and the timestamp corresponding to the reference timescale of the slave node, and send the mapping relationship to the compensation calculation module.

In some embodiments, the statistics module receives a plurality of master clock timestamps of the master node and corresponding timestamps corresponding to reference timescales of the slave node that are sent by the packet timestamp module, and the statistics module executes a preset statistical algorithm based on the plurality of master clock timestamps of the master node and the timestamps corresponding to the reference timescales of the slave node, to establish the mapping relationship between the master clock of the master node and the reference timescale of the slave node.

In some embodiments, a linear regression mapping relationship is established between the master clock of the master node and the reference timescale of the slave node: $T1(t)=a+b*T2(t)$. $T1(t)$ is the master clock timestamp of the master node, $T2(t)$ is the timestamp corresponding to the reference timescale of the slave node, a is a time offset parameter between the master node and the slave node, and b is a frequency offset parameter between the master node and the slave node. It may be understood that, in another embodiment, the mapping relationship between the master clock of the master node and the reference timescale of the slave node may be quadratic linear regression or another-order linear regression, and is not limited to simple linear regression described in this embodiment of this application.

The mapping relationship is also referred to as a mapping parameter, and is used to describe a relationship between $T1(t)$ and $T2(t)$.

The statistical algorithm may be a linear regression algorithm, for example, a least square method or an iterative solution algorithm.

The compensation calculation module is configured to receive the mapping relationship sent by the statistics module, and is further configured to receive a notification message sent by the packet slave clock correction module. The notification message carries the time combination, and the time combination includes the timestamp corresponding to the reference timescale of the slave node and the slave clock time of the slave node corresponding to the reference timescale. A collection moment of the timestamp corresponding to the reference timescale and a collection moment of the slave clock time of the slave node that corresponds to the reference timescale are the same. In other words, the timestamp and the slave clock time of the slave node that correspond to the reference timescale are obtained at the same time.

The compensation calculation module is further configured to determine the compensation parameter based on the notification message and the mapping relationship, and send the compensation parameter to the packet slave clock correction module, for the packet slave clock correction module to correct the packet slave clock time of the slave node, to implement clock synchronization between the slave node and the master node.

In some embodiments, the compensation calculation module is configured to determine, based on the mapping relationship and a time combination corresponding to a specific moment, an initial time offset that is between the master node and the slave node and that corresponds to the specific moment, and determine a time compensation parameter based on the mapping relationship, the time combination, and the initial time offset. In other words, the compensation calculation module determines the initial time offset between the master node and the slave node, determines a time compensation offset based on the initial time offset, and performs compensation for a reference clock of the slave node based on the time offset between the master node and the slave node, to implement clock synchronization between the master node and the slave node.

Further, after the initial time offset is determined, the compensation calculation module is further configured to determine an initial frequency offset between the master node and the slave node, to lock a frequency offset between the master node and the slave node in a process of determining the time compensation parameter, so as to improve accuracy of clock synchronization between the master node and the slave node.

The reference clock herein may be a dedicated clock that serves as the slave clock time and that is in the slave node, may be a reference clock corresponding to the reference timescale, or may be a reference clock corresponding to the packet slave correction module.

In some embodiments, first, the compensation calculation module periodically receives the reported notification message from the packet slave clock correction module. The notification message carries slave clock time $Tb(t)$ that is of the slave node and that is output by the packet slave clock correction module and a timestamp $T2n(t)$ that corresponds to the reference timescale and that is output by the reference timescale at the moment t.

Second, the compensation calculation module maintains two mapping relationship registers a and b, and updates the mapping relationship registers based on mapping relationships $a(t)$ and $b(t)$ input by the statistics module, to ensure that mapping relationship registers a and b correspond to a time offset parameter a and a frequency offset parameter b in a latest mapping relationship.

Then, the compensation calculation module maintains an initial phase difference register initialOffset, to lock an initial time offset between the packet master clock of the master node and the packet slave clock of the slave node.

For example, when the packet slave clock starts to be in a locked state, the compensation calculation module determines that the moment is a moment $t=0$, and performs initialization: $initialOffset=a(0)+b(0)*T2n(0)-Tb(0)$.

Finally, the compensation calculation module receives the notification message sent by the packet slave clock correction module, where the notification message carries the packet slave clock time $Tb(t)$ sent by the packet slave clock correction module and the time $T2n(t)$ output by the reference timescale at the moment t, calculates a time offset compensation parameter Offset, and sends the time offset compensation parameter to the packet slave clock correction module. a(0) is a time offset parameter at an initial moment, and b(0) is a frequency offset parameter at the initial moment.

The compensation calculation module calculates the time offset compensation parameter Offset by using the following formula:

$$Offset = T1(t) - Tb(t) - initialOffset,$$

where $T1(t) = a + b \cdot T2n(t)$.

If Offset is a positive value, the packet slave clock time Tb(t) of the slave node is slower than the master clock T1(t). In this case, Offset needs to be added to the packet slave clock time Tb, to implement clock synchronization between the master node and the slave node. If Offset is a negative value, the packet slave clock time Tb(t) of the slave node is faster than the master clock T1(t). In this case, subtraction needs to be performed between Offset and the packet slave clock time Tb, to implement clock synchronization between the master node and the slave node.

In some embodiments, if it is determined that route path changing occurs in a process of transmitting the synchronization packet between the master node and the slave node, and consequently, transmission time of the synchronization packet between the master node and the slave node changes, a corresponding frequency offset increment (also referred to as a difference between inherent delays) deltaOffsetCasuedByRouteChange, namely, a frequency offset caused by route change, may be determined based on a change in a time layer jitter that corresponds to the master clock timestamp of the master node carried in the synchronization packet after route change and the reference timescale of the slave node, and then initialOffset is updated based on the frequency offset increment.

Specifically, initialOffset=initialOffset+deltaOffsetCasuedByRouteChange.

It may be understood that, in some embodiments, changing may occur for a plurality of times in a process of transmitting a plurality of synchronization packets between the master node and the slave node. For example, a path A is changed to a path B at a 5th minute, and the path B is changed back to the path A at a 10th minute. In this way, before the 5th minute, a locked frequency offset is initialOffset. When route change occurs, an updated frequency offset is initialOffset_orig. When route change occurs again at the 10th minute, and a time offset between the path after changing and the path before the 5th minute is less than a preset threshold, it is determined that the path between the master node and the slave node is changed to the original path, and the frequency offset is updated to initialOffset. The frequency offset is reset to initialOffset to significantly reduce an accumulated offset of initialOffset calculation caused by a plurality of times of route change.

In some embodiments, the compensation calculation module is further configured to determine, based on the mapping relationship and the time combination, a frequency compensation parameter between the master node and the slave node within a preset compensation periodicity interval. In other words, frequency compensation is performed for the reference clock of the slave node by using the frequency compensation parameter, to obtain the slave clock time of the slave node, thereby implementing clock synchronization between the slave node and the master node.

Further, the compensation calculation module may determine the time compensation parameter and the frequency compensation parameter according to the foregoing method, then perform time compensation for the reference clock of the slave node based on the time compensation parameter, and perform frequency compensation for the reference clock of the slave node based on the frequency compensation parameter and the compensation periodicity interval, to implement clock synchronization between the slave node and the master node.

In some embodiments, the compensation calculation module and the packet slave clock correction module determine a compensation periodicity interval, determine, based on the notification message and the mapping relationship, a frequency offset between the master node and the slave node within the compensation periodicity interval, and perform periodic frequency offset compensation for the reference clock of the slave node based on the determined frequency offset, to obtain reference clock time, thereby implementing clock synchronization between the slave node and the master node.

In some embodiments, if the compensation periodicity interval is C, and the mapping relationship is $T1(t) = a + b \cdot T2(t)$, the frequency offset between the master node and the slave node freqComp=(b-1)\*C. If b=1, and freqComp=0, there is no need to perform frequency offset compensation. If b is not 1, and freqComp is not 0, the packet slave clock correction module performs frequency offset compensation with a periodicity of C on the slave clock time of the slave node based on a freqComp parameter input by the compensation calculation module.

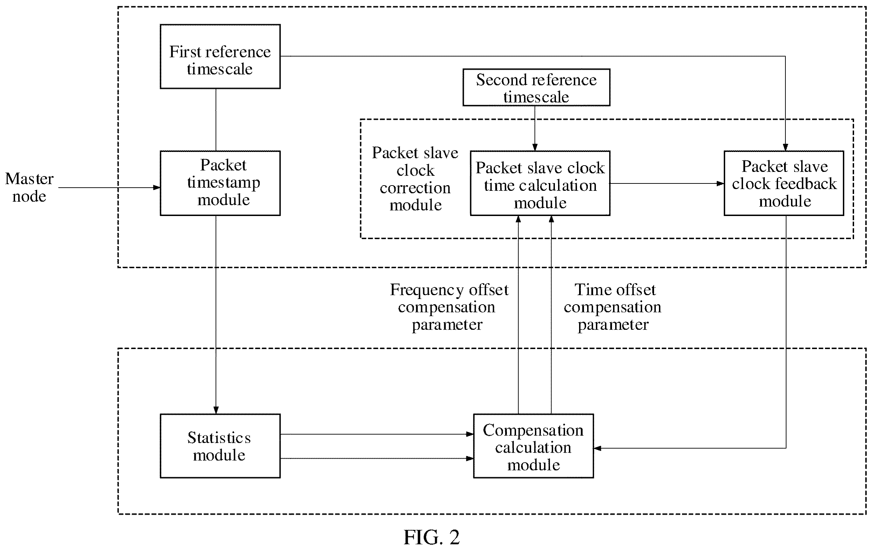

Refer to FIG. 2. A packet slave clock correction module in FIG. 2 includes a packet slave clock time calculation module and a packet slave clock time feedback module.

Reference timescales in FIG. 2 include a first reference timescale and a second reference timescale. The first reference timescale and the second reference timescale may be a same reference timescale, or the first reference timescale and the second reference timescale may be two different reference timescales.

The packet slave clock time calculation module has the following functions:

1. Perform frequency compensation on a timestamp T2m(t) corresponding to an original clock before correction.

The original clock before correction may use a first reference timescale of a slave node, or may use a second reference timescale (for example, the second reference timescale in FIG. 2) dedicated to the packet slave clock correction module. This is not limited in this application.

Specifically, the slave clock time calculation module determines a compensation periodicity interval C, receives a frequency offset compensation value freqComp sent by a compensation calculation module, and then performs, every periodicity duration of C, compensation on the timestamp T2m(t) corresponding to the original clock before correction.

$\Delta T2m=T2m(t)-T2m(t-1)$. $\Delta T2m$ is duration between two original clock moments T2m(t) and T2m(t-1) before frequency compensation for the original clock of the slave node.

$\Delta Tb=\Delta T2m+\Delta T2m/C*freqComp$. $\Delta Tb$ is a time length between two original clock moments T2m(t) and T2m(t-1) after frequency compensation for the slave node.

In this case, a timestamp of a packet slave clock of the slave node after frequency compensation at the moment T2m(t) is $T2m(t)=T2m(t-1)+\Delta Tb$.

2. Perform time offset compensation on original time Tb before correction.

Specifically, receive a time offset compensation parameter Offset sent by the compensation calculation module, and perform time compensation on Tb based on the time offset compensation parameter.

For example, Tb=Tb+Offset.

The packet slave clock time feedback module is configured to periodically combine Tb(t) input by the packet slave clock time calculation module and time T2n(t) output by a reference timescale at a moment t into a 2-tuple, and send Tb(t) and T2n(t) to the compensation calculation module by using a notification message, for the compensation calculation module to perform time offset compensation calculation.

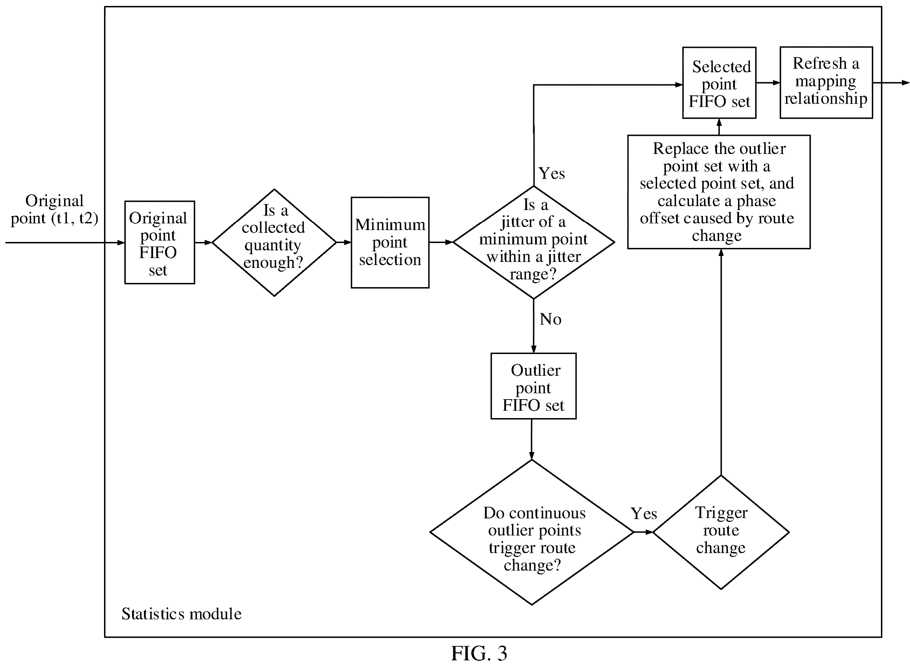

FIG. 3 is a diagram of a method for determining a mapping relationship by a statistics module according to an embodiment of this application.

FIG. 3 includes an original point, a minimum point, a selected point, and an outlier point. The original point is all 2-tuples of T1(t) and T2(t) reported by a packet timestamp module. The minimum point is an output result obtained by performing minimum point selection processing on several original points. When the minimum point meets a condition for being added to a set corresponding to the selected point, the minimum point is classified as the selected point. When the minimum point does not meet the condition for being added to the set corresponding to the selected point, the minimum point is classified as the outlier point.

Specifically, the statistics module denotes a 2-tuple including T1(t) carried in a synchronization message sent by a master node and the reference timescale T2(t) of a slave node as a "point", denotes, as the "original point", all 2-tuples that are sent by the packet timestamp module to the statistics module, and then adds the original point to an original point FIFO set.

A size of the original point FIFO set is limited, and the size may be preset to a fixed size, or may be determined based on a clock indicator metric such as a TDEV or an MTIE, to determine a data jitter in the original point FIFO set, and then the size of the original point FIFO set is dynamically adjusted based on the data jitter.

For example, when the data jitter in the original point FIFO set is relatively large, the size of the original point FIFO set may be increased, to collect more data, so as to reduce an error of a statistical algorithm. When the jitter is relatively small, the size of the original point FIFO set may be decreased, to increase output frequency of the statistical algorithm.

The original point FIFO set is a first-in-first-out set. For a first-entered original point FIFO set, when a size of the original point FIFO set exceeds a preset size, a point that first enters the set is deleted from the original point FIFO set, to ensure that the size of the original point FIFO set meets a specified value.

When a quantity of original points in the original point FIFO set reaches a preset size threshold, the statistics module determines a selected point in a FIFO set based on a selected point selection algorithm.

For example, a point with a minimum packet delay (PacketDelay) is selected from all original point FIFO sets as a minimum point, and then the minimum point is added to a selected point FIFO set. Subsequently, the determined minimum point based on the minimum packet delay is compared with the selected point FIFO set to determine whether an offset between the minimum point and the selected point set is within a preset jitter range. If the offset is within the preset jitter range, the minimum point is added to the selected point FIFO set. If the offset exceeds the preset jitter range, the minimum point is added to an outlier point FIFO set.

PacketDelay=t2(t)-t1(t). t1(t) is a master clock timestamp of the master node, and t2(t) is a reference timescale of the slave node.

Further, when PacketDelay of two points are compared, impact of a frequency offset may be further excluded as much as possible.

For example, it is assumed that a previous mapping relationship between T1(t) and T2(t) based on the statistical algorithm is output as: T1(t)=a+b*T2(t). T1(t) is the master clock timestamp of the master node, T2(t) is the reference timescale of the slave node, a is a time offset parameter between the master node and the slave node, and b is a frequency offset parameter between the master node and the slave node.

From a moment tx to a moment ty, impact of the frequency offset on a time offset is (T2(ty)-T2(tx))*(b-1). When b=1, the frequency offset has no impact on the time offset.

If the frequency offset is not considered, PacketDelay(ty)-PacketDelay(tx)=(T2(ty)-T1(ty))-(T2(tx)-T1(tx))= (T2(ty)-T2(tx))-(T1(ty)-T1(tx)), that is, $\Delta$PacketDelay=$\Delta$T2-$\Delta$T1.

If it is considered to eliminate the impact of the frequency offset, PacketDelay(ty)-PacketDelay(tx)= (T2(ty)-T2(tx))-(T1(ty)-T1(tx))-(T2(ty)-T2(tx))*(b-1)=(T2(ty)-T2(tx))*b-(T1(ty)-T1(tx)), that is, $\Delta$PacketDelay=$\Delta$T2*b-$\Delta$T1.

By comparing $\Delta$PacketDelay between two original points, the statistics module sorts all points in the original point FIFO set, and selects a point with minimum PacketDelay as an output of a minimum point selection algorithm. It is clear that a preset quantity or a preset proportion of points with minimum PacketDelay may alternatively be selected as an output of a minimum point selection algorithm. It is clear that a preset quantity or a preset proportion of points with minimum PacketDelay may alternatively be averaged, and an average value is used as an output of a minimum point selection algorithm.

In some embodiments, a minimum point output from the original point FIFO set is compared with a data set in the selected point FIFO set, and whether the minimum point output from the original point FIFO set is within an offset range is determined. A determining method includes the following steps:

First, the mapping relationship between T1(t) and T2(t) is determined based on the data set in the selected point FIFO set: T1(t)=a+b*T2(t), and the minimum point output from the original point FIFO set is (T1m(t), T2m(t)).

Then, an offset Diff=a+b*T2m(t)-T1m(t) is determined. If the offset value exceeds a preset offset range, the minimum point output from the original point FIFO set is determined as an outlier point, and the outlier point is added to the outlier point FIFO set. If the offset value is within the preset offset range, the minimum point output from the original point FIFO set is determined as a selected point, the minimum point is added to the selected point FIFO set, and the mapping relationship between T1(t) and T2(t) is updated based on the statistical algorithm and an updated selected point FIFO set.

It is easy to understand that, in a transmission process of the synchronization packet sent by the master node to the slave node, network congestion or route change on a transmission path may cause transmission delay fluctuation, and consequently, fluctuation of the minimum point output from the original point FIFO set exceeds the preset jitter range. Currently, when a selected point FIFO set is determined, if fluctuation of a minimum point output from an original point FIFO set exceeds a preset jitter range, the outlier point is usually discarded. As a result, the minimum point cannot be effectively used.

In this embodiment of this application, in a process of determining the selected point FIFO set, if the minimum point output from the original point FIFO set is an outlier point, the statistics module determines whether the outlier point is caused by changing of the transmission path of the synchronization packet. If the outlier point is caused by changing of the transmission path of the synchronization packet, the selected point FIFO set is updated based on the outlier point FIFO set. If the outlier point is caused by another case, the outlier point FIFO set is discarded. In this way, an outlier point caused by route change may be used as a new selected point. In this way, a quantity of selected points in the selected point FIFO set is increased, and accuracy of determining the mapping relationship based on the selected point FIFO set is improved.

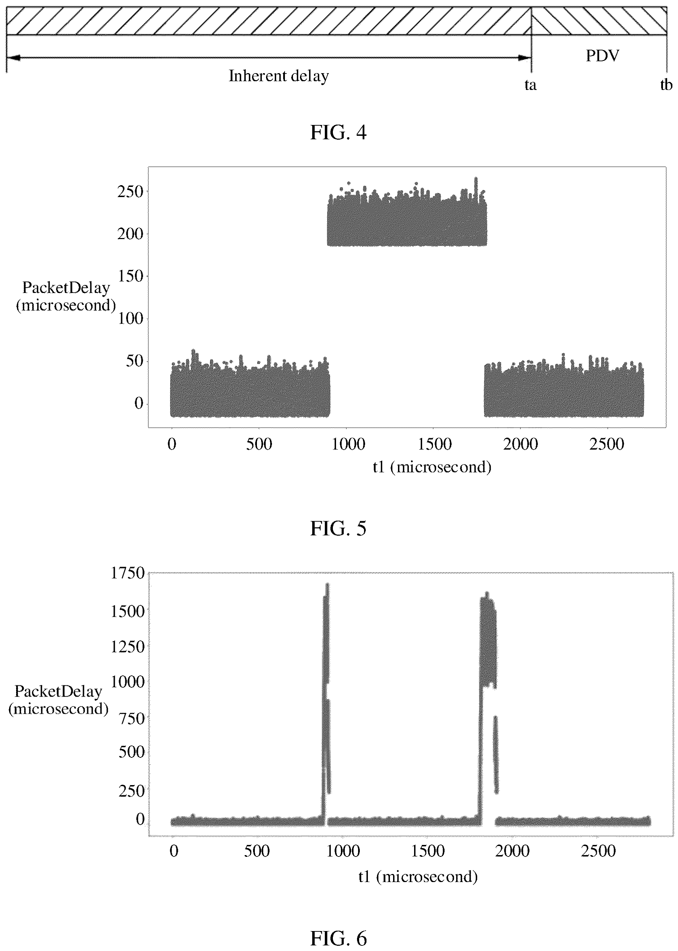

FIG. 4 is a diagram of a transmission delay of a synchronization packet. The transmission delay includes an inherent delay and a PDV. The inherent delay is a minimum delay in a process in which the master node transmits the synchronization packet to the slave node, and may include, for example, an inherent delay of internal processing and a propagation delay. The PDV is a variable part of the transmission delay of the synchronization packet, for example, a variable queuing delay caused by storage and forwarding by a network node. Time of transmitting the synchronization packet between the master node and the slave node may be between ta and tb. ta is an inherent delay, and a difference between tb and ta is a PDV that may be generated in the transmission process of the synchronization packet.

The PDV may be determined through filtering and denoising that are performed by using the foregoing minimum point selection method, minimum point jitter determining method, selected point FIFO set mapping relationship regression method, and the like. If route change occurs in the transmission process of the synchronization packet, an inherent delay of a master clock of the master node and an inherent delay of a packet slave clock of the slave node may change, and accuracy of the packet slave clock of the slave node is severely affected.

When a minimum point in an original point FIFO set is determined according to the foregoing method, and it is determined that a jitter of the minimum point exceeds a preset jitter range, the minimum point is added to an outlier point FIFO set, and then whether the outlier point in the outlier point FIFO set is caused by route change, to be specific, whether that the jitter of the minimum point exceeds the preset jitter range is caused by route change occurring on a path between the master node and the slave node, is determined in the following manner.

Specifically, if the outlier point in the outlier point FIFO set meets the following route change conditions, it is determined that route change occurs on the path between the master node and the slave node:

a route change condition 1: a quantity of outlier points in the outlier point FIFO set being greater than a preset quantity threshold; and

a route change condition 2: a jitter of the outlier point in the outlier point FIFO set being within the preset jitter range.

FIG. 5 is a diagram of a route change scenario according to an embodiment of this application. As shown in FIG. 5, a horizontal coordinate is clock time t2 of a slave node, and a vertical coordinate is PacketDelay, that is, PacketDelay=t2-t1. t1 is clock time of a master node, and t2 is clock time of the slave node. It can be learned from FIG. 5 that route change occurs on a synchronization packet transmission path between the master node and the slave node at about a 900th microsecond, in a range from the 900th microsecond to a 1700th microsecond, a PDV of the synchronization packet increases, jitters of all points in the range are within a preset range, that is, the jitters are relatively small, and there are a relatively large quantity of minimum points in the range from the 900th microsecond to the 1700th microsecond. In this case, it can be determined that route change occurs in transmission of the synchronization packet in the range from the 900th microsecond to the 1700th microsecond.

FIG. 6 is a diagram of a network congestion scenario according to an embodiment of this application. In FIG. 6, a PDV of a synchronization packet increases at a 900th microsecond and a 1900th microsecond due to temporary congestion occurring on a buffer in a packet network. Time of network congestion is mostly very short. In this case, because a quantity of outlier points affected by network congestion is small, and a jitter of an adjacent outlier point is large, it can be determined that an outlier point having this feature is not caused by route change.

In some embodiments, jitter measurement may be performed on an outlier point in an outlier point FIFO set based on an indicator such as an MTIE or a TDEV. A statistics module determines a first mapping relationship based on the outlier point FIFO set and a regression algorithm: T1(t)=a+b*T2(t). The mapping relationship is strongly correlated with a second mapping relationship obtained based on a selected point FIFO set and a regression algorithm. The strong correlation may be determined based on whether a quantity of continuous outlier points whose offsets between b1 in the first mapping relationship and b in the first mapping relationship are less than a preset threshold is greater than a preset quantity threshold.

In some embodiments, the route change conditions further include:

a route change condition 3: a difference between inherent time of a time offset parameter a determined based on the outlier point FIFO set and inherent time of a time offset parameter a determined based on the selected point FIFO set being greater than a preset delay range. It may be understood that, if route change occurs in a transmission process of the synchronization packet, because paths before and after switching are different, a fixed delay of transmission of the synchronization packet changes, and in most changing scenarios, a change between transmission delays of transmission of the synchronization packet before and after the switching is great. The route change condition 3 is introduced to avoid mistakenly considering, as a transmission delay jitter caused by route change, a transmission delay jitter caused by another scenario.

It may be understood that, when it is determined that route change occurs on a transmission path of the synchronization packet, the statistics module performs corresponding route change processing. To be specific, the statistics module needs to calculate a phase offset parameter (the difference between the inherent delays) caused by route change deltaOffsetCausedByRouteChange.

That the statistics module calculates the phase offset parameter specifically includes the following steps:

determining an average value of all selected points in the selected point FIFO set to obtain a first average point;
determining an average value of all outlier points in the outlier point FIFO set to obtain a second average point;
determining a frequency offset calculation parameter based on the selected point in the selected point FIFO set and the outlier point in the outlier point FIFO set; and
determining the difference between the inherent delays according to the following formula:

$$\text{deltaOffsetCausedByRouteChange} = -(\text{T1outlier} - \text{T1selected}) + \text{b\_routechange} * (\text{T2outlier} - \text{T2selected}).$$

deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point.

For example, the statistics module determines the difference between the inherent delays according to the following steps:

Step A: Determine an average value of all points in the selected point FIFO set to obtain a point A (T1outlier, T2outlier).
Step B: Determine an average value of all points in the outlier point FIFO set to obtain a point B (T1selected, T2selected).
Step C: Determine a frequency offset calculation parameter b_routechange.

Determining the frequency offset calculation parameter b_routechange includes the following two methods:

Method 1: Determine a jitter of the selected point in the selected point FIFO set and a jitter of the outlier point in the outlier point FIFO set, and determine, as the frequency offset calculation parameter b_routechange, a b value of a set in which the jitter is smaller; and

Method 2: Determine an average value of a b value of the selected point FIFO set and a b value of the outlier point FIFO set, and use the average value as the frequency offset calculation parameter b_routechange.

It may be understood that, in another embodiment, corresponding weights may be allocated based on a size of the selected point FIFO set and a size of the outlier point FIFO set, and the frequency offset calculation parameter b_routechange is determined based on the weights and corresponding average values.

For example, if the size of the selected point FIFO set is 100, the average value is 10, the size of the outlier point FIFO set is 50, and the average value is 6, the weight corresponding to the selected point FIFO set is 2, the weight corresponding to the outlier point FIFO set is 1, and the outlier point FIFO set is 3. The average value is (2*6+1*3)/2=7.5. In other words, b_routechange is 7.5.

Step D: Calculate the difference between the inherent delays in the following manner:

$$\text{deltaOffsetCausedByRouteChange} = -(\text{T1outlier} - \text{T1selected}) + \text{b\_routechange}(\text{T2outlier} - \text{T2selected}).$$

When deltaOffsetCausedByRouteChange is a positive value, it indicates that a delay in the outlier point FIFO set is larger than a delay in the selected point FIFO set.

Further, the statistics module may update the selected point FIFO set based on the outlier point FIFO set, and then determine a new mapping relationship based on an updated FIFO set. Then, the updated mapping relationship and deltaOffsetCausedByRouteChange are sent to a compensation calculation module, and the outlier point FIFO set is cleared.

It may be understood that the sets in the foregoing embodiments are all FIFO sets. It may be understood that, in another embodiment, the sets may alternatively be sets of other types, provided that a point that meets a requirement, such as a point that is in the set and that is stored for the longest storage time or has largest PacketDelay, can be selected.

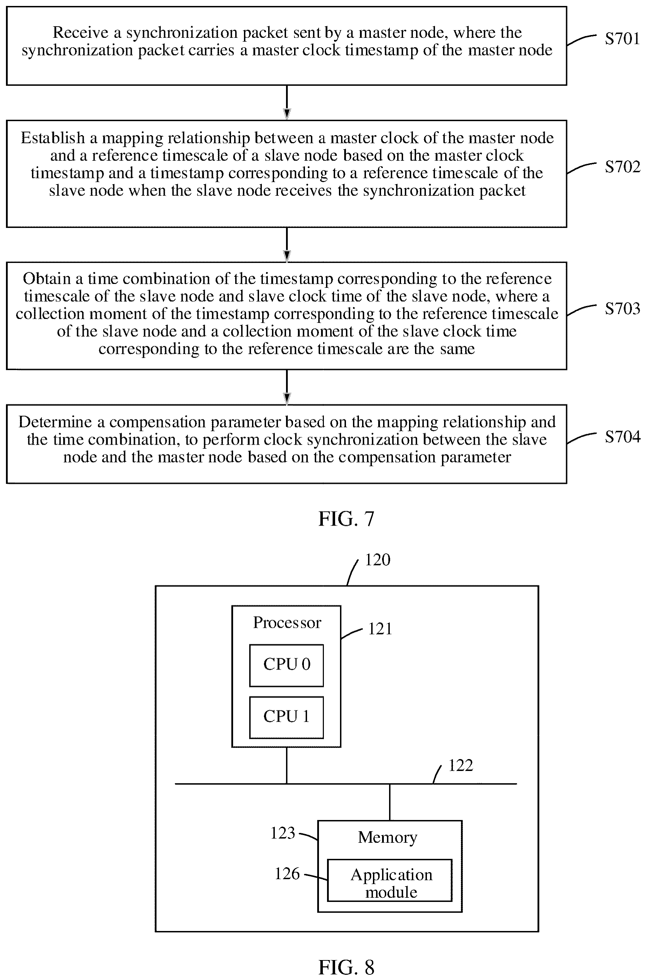

FIG. 7 is a schematic flowchart of a clock synchronization method according to an embodiment of this application. The clock synchronization method is applied to the slave node shown in FIG. 1.

S701: Receive a synchronization packet sent by a master node, where the synchronization packet carries a master clock timestamp of the master node.

S702: Establish a mapping relationship between the master clock timestamp of the master node and a reference timescale of the slave node based on the master clock timestamp and a timestamp corresponding to a reference timescale of the slave node when the slave node receives the synchronization packet.

S703: Obtain a time combination of the timestamp corresponding to the reference timescale of the slave node and slave clock time of the slave node, where a collection moment of the reference timescale of the slave node and a collection moment of the slave clock time corresponding to the reference timescale are the same.

S704: Determine a compensation parameter based on the mapping relationship and the time combination, to perform clock synchronization between the slave node and the master node based on the compensation parameter.

An association between a master clock of the master node and the slave clock time of the slave node is implemented by using the reference timescale of the slave node, the compensation parameter is determined based on the mapping relationship between the master clock of the master node and the reference timescale of the slave node, and the time combination of the timestamp corresponding to the reference timescale of the slave node and the slave clock time of the slave node, and compensation is performed for a reference slave clock of the slave node based on the compensation parameter, to implement clock synchronization between the slave node and the master node.

In some embodiments, the compensation parameter includes a time compensation parameter, and determining the compensation parameter based on the mapping relationship and the time combination includes: determining, based on the mapping relationship and a time combination corresponding to a specific moment, an initial time offset that is between the master node and the slave node and that corresponds to the specific moment; and determining the time compensation parameter based on the mapping relationship, the time combination, and the initial time offset.

In some embodiments, the initial time offset is determined to lock the initial time offset between the master node and the slave node, and a time offset between the master node and the slave node, that is, the time compensation parameter, is determined after the initial time offset is locked, to ensure that a time offset when clock synchronization is performed between the slave node and the master node.

In some embodiments, the compensation parameter further includes a frequency offset compensation parameter, and the clock synchronization method further includes: determining, based on the mapping relationship and the time combination, a frequency compensation parameter between the master node and the slave node within a preset frequency compensation periodicity interval.

After time compensation is performed on the slave node, frequency compensation is periodically performed on the slave node, to implement clock synchronization between the slave node and the master node.

In some embodiments, the mapping relationship is: $T1(t)=a+b*T2(t)$. $T1(t)$ is a timestamp that is of the master node at a moment t and that is carried in the synchronization packet, $T2(t)$ is a timestamp corresponding to a reference timescale of the slave node at the moment t, a is a time offset parameter, and b is a frequency offset parameter. The initial time offset that is between the master node and the slave node, corresponds to the specific moment, and is determined based on the mapping relationship and the time combination corresponding to the specific moment, is: $initialOffset=a(0)+b(0)*T2n(0)-Tb(0)$.

initialOffset is an initial time offset between the master node and the slave node at an initial moment, $T2n(0)$ is a timestamp corresponding to a reference timescale of the slave node at the initial moment, and $Tb(0)$ is slave clock time of the slave node at the initial moment. The initial moment is a moment at which the slave node locks a frequency offset between the master node and the slave node.

The time compensation parameter determined based on the mapping relationship, the time combination, and the initial time offset is: $Offset=T1(t)-Tb(t)-initialOffset$, where

$$T1(t)=a+*T2n(t).$$

Offset is the time compensation parameter, $Tb(t)$ is slave clock time of the slave node at the moment t, and $T2n(t)$ is the timestamp corresponding to the reference timescale of the slave node at the moment t.

The mapping relationship between the master clock of the master node and the reference timescale of the slave node is a simple regression function, and the time compensation parameter is calculated based on the mapping relationship, so that clock synchronization performance between the slave node and the master node is good.

In some embodiments, the frequency compensation parameter that is between the master node and the slave node, corresponds to the compensation periodicity interval, and is determined based on the mapping relationship and the time combination, is $freqComp=(b-1)*C$. freqComp is the frequency compensation parameter, and C is the compensation periodicity interval. Frequency compensation within the compensation periodicity interval is determined based on the foregoing mapping relationship.

It may be understood that sets in the following embodiments are all FIFO sets. It may be understood that, in another embodiment, the sets may alternatively be sets of other types, provided that a point that meets a requirement, such as a point that is in the set and that is stored for the longest storage time or has largest PacketDelay time, can be selected.

In some embodiments, the establishing the mapping relationship between the master clock of the master node and the reference timescale of the slave node includes: constructing an original point FIFO set based on a plurality of master clock timestamps of the master node and reference timescales of the slave node; determining a minimum point in the original point FIFO set; determining a selected point in a selected point FIFO set based on the minimum point; and determining the mapping relationship between the master clock of the master node and the reference timescale of the slave node based on the selected point FIFO set. The selected point is determined by using a minimum point algorithm, and the mapping relationship is determined based on the selected point. The minimum point may be a point having minimum PacketDelay.

In some embodiments, the clock synchronization method further includes: determining an outlier point FIFO set based on the minimum point, where a jitter between a master clock timestamp of the master node and a timestamp corresponding to a reference timescale of the slave node in the outlier point FIFO set exceeds a preset jitter range; and determining, based on the outlier point FIFO set, that route change occurs on a path between the master node and the slave node, and updating the selected point FIFO set based on the outlier point FIFO set. When it is determined that the outlier point is caused by route change, the outlier point may be used as a new selected point, to increase a quantity of selected points and improve accuracy of the mapping relationship.

In some embodiments, determining, based on the outlier point FIFO set, that route change occurs on the path between the master node and the slave node includes: if a minimum point in the outlier point FIFO set meets the following route change conditions, determining that route change occurs on the path between the master node and the slave node: a route change condition 1: a quantity of minimum points in the outlier point FIFO set being greater than a preset quantity threshold; and a route change condition 2: a jitter of the minimum point in the outlier point FIFO set being within a preset jitter range.

Whether the minimum point in the outlier point FIFO set meets the changing condition is determined by using the foregoing determining conditions. If the minimum point meets the changing condition, the minimum point in the outlier point FIFO set is used as a new selected point. A quantity of selected points is increased, to improve accuracy of the mapping relationship.

In some embodiments, the route change conditions further include: a route change condition 3: a difference between an inherent delay at the selected point in the selected point FIFO set and an inherent delay at the outlier point in the outlier point FIFO set being greater than a preset distance range. The route change condition 3 is used to avoid mistakenly selecting, as a selected point, an outlier point caused by network congestion or the like.

In some embodiments, a method for determining the difference between the inherent delays includes: determining an average value of all selected points in the selected point FIFO set to obtain a first average point; determining an average value of all outlier points in the outlier point FIFO set to obtain a second average point; determining a frequency offset calculation parameter based on the selected point in the selected point FIFO set and the outlier point in the outlier point FIFO set; and determining the difference between the inherent delays according to the following formula: deltaOffsetCausedByRouteChange=-(T1outlier-T1selected)+b_routechange*(T2outlier-T2selected).

deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point. It is determined that route change occurs in a transmission process of the synchronization packet, and then delay compensation caused by route change is determined. Compensation for a transmission delay increment caused by route change is performed by using the difference between the inherent delays, to ensure boundedness of clock synchronization between the slave node and the master node.

In some embodiments, determining the frequency offset parameter based on the selected point in the selected point FIFO set and the outlier point in the outlier point FIFO set includes: obtaining a first mapping relationship corresponding to all the selected points in the selected point FIFO set and a second mapping relationship corresponding to all the outlier points in the outlier point FIFO set; and determining the frequency offset calculation parameter based on the first mapping relationship and the second mapping relationship.

The frequency offset calculation parameter is determined by selecting a mapping relationship corresponding to a FIFO set having a small jitter, to improve accuracy of calculating the difference between the inherent delays.

In some embodiments, determining the frequency offset calculation parameter based on the selected point in the selected point FIFO set and the outlier point in the outlier point FIFO set includes: obtaining a first jitter range of the selected point in the selected point FIFO set and a second jitter range of the outlier point in the outlier point FIFO set; and determining a mapping relationship of a FIFO set corresponding to a smaller jitter in the first jitter range and the second jitter range, to determine the frequency offset calculation parameter. According to the foregoing technical solution, the frequency offset calculation parameter is determined by selecting an average value of mapping relationships corresponding to an amount FIFO set, to improve accuracy of calculating the difference between the inherent delays.

In some embodiments, the synchronization packet sent by the master node is received over a packet switched network.

FIG. 8 is a diagram of a structure of a slave node according to an example embodiment of this application. The slave node may implement a function of the slave node in FIG. 1 to FIG. 6.

The slave node 120 includes a processor 121, a bus 122, and a memory 123.

The processor 121 may include one or more central processing units (Central Processing Units, CPUs), for example, a CPU 0 and a CPU 1. The processor 121 executes various functional applications and service processing by running a software program and a module.

The memory 123 is connected to the processor 121 through the bus 122.

The memory 123 may be configured to store the software program and the module, where the software program and the module are executed by the processor 121. In addition, the memory 123 may further store various types of service data. In this embodiment of this application, the software program and the module that are stored in the memory 123 may include an application module 126 required by at least one function that is executed by the processor 121.

A person skilled in the art should understand that embodiments of this application may be provided as a method, a system, or a computer program product. Therefore, this application may use a form of hardware embodiments, software embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code. The computer program code may be stored in a computer-readable memory that can guide a computer or another programmable data processing device to operate in a particular manner.

An embodiment further provides a computer storage medium. The computer storage medium stores computer instructions. When the computer instructions are run on an ingress device, the ingress device is enabled to perform the steps of the foregoing related method, to implement the clock synchronization method in the foregoing embodiments.

An embodiment further provides a computer program product. When the computer program product runs on an ingress device, the ingress device is enabled to perform the foregoing related steps, to implement the clock synchronization method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the clock synchronization method in the foregoing method embodiments.

The foregoing descriptions about implementations allow a person skilled in the art to understand that, for the purpose of convenient and brief description, division of the foregoing functional modules is used as an example for illustration. In actual application, the foregoing functions can be allocated to different functional modules for implementation based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division of the modules or modules is merely logical function division and may be other division during actual implementation. For example, a plurality of modules or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may be or may not be physically separated. Components displayed as modules may be one physical module or a plurality of physical modules, that is, may be located at one location or may be distributed at a plurality of different locations. Some or all the modules may be selected according to actual needs to achieve the objectives of the solutions of embodiments.

In addition, functional modules in this application may be integrated into one processing module, or each of the modules may exist alone physically, or two or more modules are integrated into one module. The integrated module may be implemented in a form of hardware, or may be implemented in a form of a software functional module.

If the integrated module is implemented in the form of a software functional module and sold or used as an independent product, the module may be stored in a readable storage medium. Based on such an understanding, the technical solutions of this application essentially, or the part contributing to conventional technologies, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A clock synchronization method, applied to a slave node, wherein the clock synchronization method comprises:

   receiving a synchronization packet sent by a master node, wherein the synchronization packet carries a master clock timestamp of the master node;
   establishing a mapping relationship between a master clock of the master node and a reference timescale of the slave node based on the master clock timestamp and a timestamp corresponding to a reference timescale of the slave node when the slave node receives the synchronization packet;
   obtaining a time combination of the timestamp corresponding to the reference timescale of the slave node and slave clock time of the slave node, wherein a collection moment of the timestamp corresponding to the reference timescale of the slave node and a collection moment of the slave clock time corresponding to the reference timescale are the same; and
   determining a compensation parameter based on the mapping relationship and the time combination, to perform clock synchronization between the slave node and the master node based on the compensation parameter.

2. The clock synchronization method according to claim 1, wherein the compensation parameter comprises a time compensation parameter, and determining the compensation parameter based on the mapping relationship and the time combination comprises:

determining, based on the mapping relationship and a time combination corresponding to a specific moment, an initial time offset that is between the master node and the slave node and that corresponds to the specific moment; and

determining the time compensation parameter based on the mapping relationship, the time combination, and the initial time offset.

3. The clock synchronization method according to claim 2, wherein the compensation parameter further comprises a frequency offset compensation parameter, and the clock synchronization method further comprises:

determining, based on the mapping relationship and the time combination, a frequency compensation parameter between the master node and the slave node within a preset frequency compensation periodicity interval.

4. The clock synchronization method according to claim 3, wherein the mapping relationship between the master clock of the master node and the reference timescale of the slave node is:

$T1(t)=a+b*T2(t)$, wherein $T1(t)$ is a timestamp that is of the master node at a moment t and that is carried in the synchronization packet, $T2(t)$ is a timestamp corresponding to a reference timescale of the slave node at the moment t, a is a time offset parameter, and b is a frequency offset parameter;

the initial time offset that is between the master node and the slave node, corresponds to the specific moment, and is determined based on the mapping relationship and the time combination corresponding to the specific moment is:

$$initialOffset=a(0)+b(0)*T2n(0)-Tb(0),$$

wherein

initialOffset is an initial time offset between the master node and the slave node at an initial moment, $T2n(0)$ is a timestamp corresponding to a reference timescale of the slave node at the initial moment, $Tb(0)$ is slave clock time of the slave node at the initial moment, $a(0)$ is a time offset parameter at the initial moment, and $b(0)$ is a frequency offset parameter at the initial moment; and

the time compensation parameter determined based on the mapping relationship, the time combination, and the initial time offset is:

$$Offset=T1(t)-Tb(t)-initialOffset,$$

wherein

$$T1(t)=a+b*T2n(t);$$

and

Offset is the time compensation parameter, $Tb(t)$ is slave clock time of the slave node at the moment t, and $T2n(t)$ is the timestamp corresponding to the reference timescale of the slave node at the moment t.

5. The clock synchronization method according to claim 4, wherein the frequency compensation parameter that is between the master node and the slave node, corresponds to the compensation periodicity interval, and is determined based on the mapping relationship and the time combination, is:

$$freqComp=(b-1)*C,$$

wherein

freqComp is the frequency compensation parameter, and C is the compensation periodicity interval.

6. The clock synchronization method according to any one of claims 1 to 5, wherein establishing the mapping relationship between the master clock of the master node and the reference timescale of the slave node based on the master clock timestamp and the timestamp corresponding to the reference timescale of the slave node when the slave node receives the synchronization packet comprises:

constructing an original point set based on a plurality of master clock timestamps of the master node and timestamps corresponding to reference timescales of the slave node;
determining a minimum point in the original point set;
determining a selected point in a selected point set based on the minimum point; and
determining the mapping relationship between the master clock of the master node and the reference timescale of the slave node based on the selected point set.

7. The clock synchronization method according to claim 6, wherein the clock synchronization method further comprises:

determining an outlier point set based on the minimum point, wherein a jitter between a master clock timestamp of the master node and a timestamp corresponding to a reference timescale of the slave node in the outlier point set exceeds a preset jitter range;
determining, based on the outlier point set, that route change occurs on a path between the master node and the slave node; and
updating, based on the outlier point set, the selected point set on a basis that route change occurs on the path between the master node and the slave node.

8. The clock synchronization method according to claim 7, wherein determining, based on the outlier point set, that route change occurs on the path between the master node and the slave node comprises:
if a minimum point in the outlier point set meets route change conditions, determining that route change occurs on the path between the master node and the slave node, wherein the route change conditions comprise:

a route change condition 1: a quantity of outlier points in the outlier point set being greater than a preset quantity threshold; and
a route change condition 2: a jitter of the outlier point in the outlier point set being within the preset jitter range.

9. The clock synchronization method according to claim 8, wherein the route change conditions further comprise:
a route change condition 3: a difference between an inherent delay at the selected point in the selected point set and an inherent delay at the corresponding outlier point in the outlier point set being greater than a preset delay range.

10. The clock synchronization method according to claim 9, wherein a method for determining the difference between the inherent delays comprises:

determining an average value of all selected points in the selected point set to obtain a first average point;
determining an average value of all outlier points in the outlier point set to obtain a second average point;
determining a frequency offset calculation parameter based on the selected point in the selected point set and the outlier point in the outlier point set; and
determining the difference between the inherent delays according to the following formula:

deltaOffsetCausedByRouteChange = -(T1outlier - T1selected) + b_routechange * (T2outlier- T2selected), wherein

deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point.

11. The clock synchronization method according to claim 10, wherein determining the frequency offset calculation relationship based on the selected point in the selected point set and the outlier point in the outlier point set comprises:

obtaining a first mapping relationship corresponding to all the selected points in the selected point set and a second mapping relationship corresponding to all the outlier points in the outlier point set; and
determining the frequency offset calculation parameter based on the first mapping relationship and the second mapping relationship.

12. The clock synchronization method according to claim 10, wherein determining the frequency offset calculation parameter based on the selected point in the selected point set and the outlier point in the outlier point set comprises:

obtaining a first jitter range of the selected point in the selected point set and a second jitter range of the outlier point in the outlier point set; and

determining a mapping relationship of a set corresponding to a smaller jitter in the first jitter range and the second jitter range, to determine the frequency offset calculation parameter.

13. The clock synchronization method according to any one of claims 1 to 12, further comprising

receiving, over a packet switched network, the synchronization packet sent by the master node.

14. A slave node, wherein the slave node comprises a reference timescale module, a packet timestamp module, a statistics module, a packet slave clock correction module, and a compensation calculation module, wherein

the packet timestamp module is configured to receive a synchronization packet sent by a master node, wherein the synchronization packet carries a master clock timestamp of the master node, and is further configured to receive a timestamp that corresponds to a reference timescale of the slave node when the slave node receives the synchronization packet and that is sent by the reference timescale module, and send the master clock timestamp of the master node and the timestamp corresponding to the reference timescale of the slave node to the statistics module;

the statistics module is configured to receive the master clock timestamp of the master node and the timestamp corresponding to the reference timescale of the slave node, establish a mapping relationship between a master clock of the master node and the reference timescale of the slave node, and then send the mapping relationship to the compensation calculation module;

the compensation calculation module is configured to receive the mapping relationship, and is further configured to receive a notification message sent by the packet slave clock correction module, wherein the notification message carries a time combination of the timestamp corresponding to the reference timescale of the slave node and slave clock time of the slave node, and a collection moment of the timestamp corresponding to the reference timescale of the slave node and a collection moment of the slave clock time corresponding to the reference timescale are the same; and

the compensation calculation module is further configured to determine a compensation parameter based on the mapping relationship and the time combination, and send the compensation parameter to the packet slave clock correction module, for the packet slave clock correction module to perform clock synchronization of the slave node based on the compensation parameter.

15. The slave node according to claim 14, wherein the compensation parameter comprises a time compensation parameter, and the compensation calculation module is further configured to:

determine, based on the mapping relationship and a time combination corresponding to a specific moment, an initial time offset that is between the master node and the slave node and that corresponds to the specific moment; and

determine the time compensation parameter based on the mapping relationship, the time combination, and the initial time offset.

16. The slave node according to claim 15, wherein the compensation parameter further comprises a frequency offset compensation parameter, and the compensation calculation module is further configured to:

determine, based on the mapping relationship and the time combination, a frequency compensation parameter between the master node and the slave node within a preset frequency compensation periodicity interval.

17. The slave node according to claim 16, wherein the mapping relationship between the master clock timestamp of the master node and the reference timescale of the slave node is:

$T1(t)=a+b*T2(t)$, wherein $T1(t)$ is a timestamp that is of the master node at a moment t and that is carried in the synchronization packet, $T2(t)$ is a timestamp corresponding to a reference timescale of the slave node at the moment t, a is a time offset parameter, and b is a frequency offset parameter; and

the compensation calculation module is further configured to:

determine, based on the mapping relationship and the time combination corresponding to the specific moment, that the initial time offset that is between the master node and the slave node and that corresponds to the specific moment is:

$$initialOffset=a(0)+b(0)*T2n(0)-Tb(0),$$

wherein

initialOffset is an initial time offset between the master node and the slave node at an initial moment, $T2n(0)$ is a reference timescale of the slave node at the initial moment, $Tb(0)$ is slave clock time of the slave node at the initial moment, $a(0)$ is a time offset parameter at the initial moment, and $b(0)$ is a frequency offset parameter at the initial moment; and

determine, based on the mapping relationship, the time combination, and the initial time offset, that the time compensation parameter is:

$$Offset=T1(t)-Tb(t)-initialOffset,$$

wherein

$$T1(t)=a+b*T2n(t);$$

and

Offset is the time compensation parameter, $Tb(t)$ is slave clock time of the slave node at the moment t, and $T2n(t)$ is the timestamp corresponding to the reference timescale of the slave node at the moment t.

18. The slave node according to claim 17, wherein the compensation calculation module is further configured to:

determine, based on the mapping relationship and the time combination, that the frequency compensation parameter that is between the master node and the slave node and that corresponds to the compensation periodicity interval is:

$$freqComp=(b-1)*C,$$

wherein

freqComp is the frequency compensation parameter, and C is the compensation periodicity interval.

19. The slave node according to any one of claims 14 to 18, wherein the statistics module is further configured to:

construct an original point set based on a plurality of master clock timestamps of the master node and timestamps corresponding to reference timescales of the slave node;
determine a minimum point in the original point set;
determine a selected point in a selected point set based on the minimum point; and
determine the mapping relationship between the master clock timestamp of the master node and the reference timescale of the slave node based on the selected point set.

20. The slave node according to claim 19, wherein the statistics module is further configured to:

determine an outlier point set based on the minimum point, wherein a jitter between a master clock timestamp of the master node and a timestamp corresponding to a reference timescale of the slave node in the outlier point set exceeds a preset jitter range; and
determine, based on the outlier point set, that route change occurs on a path between the master node and the slave node, and update the selected point set based on the outlier point set.

21. The slave node according to claim 20, wherein the statistics module is further configured to:
if a minimum point in the outlier point set meets route change conditions, determine that route change occurs on the path between the master node and the slave node, wherein the route change conditions comprise:

a route change condition 1: a quantity of outlier points in the outlier point set being greater than a preset quantity threshold; and
a route change condition 2: a jitter of the outlier point in the outlier point set being within the preset jitter range.

22. The slave node according to claim 21, wherein the route change conditions further comprise:
a route change condition 3: a difference between an inherent delay at the selected point in the selected point set and an inherent delay at the outlier point in the outlier point set being greater than a preset delay range.

23. The slave node according to claim 22, wherein the statistics module is further configured to:

determine an average value of all selected points in the selected point set to obtain a first average point;
determine an average value of all outlier points in the outlier point set to obtain a second average point;
determine a frequency offset calculation parameter based on the selected point in the selected point set and the outlier point in the outlier point set; and
determine the difference between the inherent delays according to the following formula:

deltaOffsetCausedByRouteChange = -(T1outlier - T1selected) + b_routechange * (T2outlier- T2selected), wherein

deltaOffsetCausedByRouteChange is the difference between the inherent delays, T1outlier is a vertical coordinate of the first average point, T2outlier is a horizontal coordinate of the first average point, b_routechange is the frequency offset calculation parameter, T1selected is a vertical coordinate of the second average point, and T2selected is a horizontal coordinate of the second average point.

24. The slave node according to claim 23, wherein determining the frequency offset calculation parameter based on the selected point in the selected point set and the outlier point in the outlier point set comprises:

obtaining a first mapping relationship corresponding to all the selected points in the selected point set and a second mapping relationship corresponding to all the outlier points in the outlier point set; and
determining the frequency offset calculation parameter based on the first mapping relationship and the second mapping relationship.

25. The slave node according to claim 23, wherein determining the frequency offset calculation parameter based on the selected point in the selected point set and the outlier point in the outlier point set comprises:

obtaining a first jitter range of the selected point in the selected point set and a second jitter range of the outlier point in the outlier point set; and
determining a mapping relationship of a set corresponding to a smaller jitter in the first jitter range and the second jitter range, to determine the frequency offset calculation parameter.

26. The slave node according to any one of claims 14 to 25, wherein
the packet timestamp module is configured to receive, over a packet switched network, the synchronization packet sent by the master node.

27. A slave node, wherein the slave node comprises:

one or more processors; and
a storage apparatus, configured to store one or more programs, wherein
when the one or more programs are executed by the one or more processors, the one or more processors are caused to implement the clock synchronization method according to any one of claims 1 to 13.

28. A computer-readable storage medium, wherein the computer-readable storage medium stores a computer program, and when the computer program is executed by a processor, the clock synchronization method according to any one of claims 1 to 13 is implemented.

FIG. 1

FIG. 2

Original point (t1, t2) → **Original point FIFO set** → ◇ Is a collected quantity enough? → **Minimum point selection** → ◇ Is a jitter of a minimum point within a jitter range?

◇ Is a jitter of a minimum point within a jitter range? — Yes → **Selected point FIFO set** → **Refresh a mapping relationship** →

◇ Is a jitter of a minimum point within a jitter range? — No → **Outlier point FIFO set** → ◇ Do continuous outlier points trigger route change? — Yes → ◇ Trigger route change → **Replace the outlier point set with a selected point set, and calculate a phase offset caused by route change** → **Selected point FIFO set**

Statistics module

FIG. 3

FIG. 4

FIG. 5

FIG. 6

Receive a synchronization packet sent by a master node, where the synchronization packet carries a master clock timestamp of the master node — S701

Establish a mapping relationship between a master clock of the master node and a reference timescale of a slave node based on the master clock timestamp and a timestamp corresponding to a reference timescale of the slave node when the slave node receives the synchronization packet — S702

Obtain a time combination of the timestamp corresponding to the reference timescale of the slave node and slave clock time of the slave node, where a collection moment of the timestamp corresponding to the reference timescale of the slave node and a collection moment of the slave clock time corresponding to the reference timescale are the same — S703

Determine a compensation parameter based on the mapping relationship and the time combination, to perform clock synchronization between the slave node and the master node based on the compensation parameter — S704

FIG. 7

120

Processor — 121

CPU 0

CPU 1

122

123 — Memory

126 — Application module

FIG. 8

## INTERNATIONAL SEARCH REPORT

| International application No. |
| --- |
| **PCT/CN2024/073814** |

| A. | CLASSIFICATION OF SUBJECT MATTER |
| --- | --- |

H04W56/00(2009.01)i; H04J3/06(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04J

Documentation searched other than minimum documentation to the extent that such documents are included in the fields searched

Electronic data base consulted during the international search (name of data base and, where practicable, search terms used)

CNTXT, ENTXT, ENTXTC, WPABS, DWPI, VCN, CNKI, IEEE: 时钟, 时间, 频率, 相位, 同步, 参考时标, reference timescale, 参考时间尺度, reference_timescale, 参考时钟, 同步报文, sync+, ntp, 1588, 时间戳, timestamp, 从时钟, 从属时钟, 映射, 补偿, 修正, 校正, clock, time, frequency, phase, slave, mapping

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114374462 A (SHANGHAI JIAO TONG UNIVERSITY) 19 April 2022 (2022-04-19) description, paragraphs 52-68 | 1-28 |
| A | CN 112187560 A (NATIONAL INSTITUTE OF METROLOGY, CHINA) 05 January 2021 (2021-01-05) entire document | 1-28 |
| A | US 2018062780 A1 (MEDIA LINKS CO., LTD.) 01 March 2018 (2018-03-01) entire document | 1-28 |
| A | US 2018191802 A1 (GLOBALFOUNDRIES INC.) 05 July 2018 (2018-07-05) entire document | 1-28 |
| A | US 2018287725 A1 (ADVA OPTICAL NETWORKING SE) 04 October 2018 (2018-10-04) entire document | 1-28 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 April 2024** | **22 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114374462 | A | 19 April 2022 | None | | | |
| CN | 112187560 | A | 05 January 2021 | None | | | |
| US | 2018062780 | A1 | 01 March 2018 | EP | 3291467 | A1 | 07 March 2018 |
| | | | | EP | 3291467 | B1 | 20 May 2020 |
| | | | | JP | 2018037885 | A | 08 March 2018 |
| | | | | JP | 6820586 | B2 | 27 January 2021 |
| | | | | AU | 2017218997 | A1 | 15 March 2018 |
| | | | | AU | 2017218997 | B2 | 20 May 2021 |
| | | | | US | 10320508 | B2 | 11 June 2019 |
| | | | | CA | 2977572 | A1 | 28 February 2018 |
| | | | | CA | 2977572 | C | 17 May 2022 |
| US | 2018191802 | A1 | 05 July 2018 | TW | 201826853 | A | 16 July 2018 |
| | | | | TWI | 651983 | B | 21 February 2019 |
| | | | | US | 10104148 | B2 | 16 October 2018 |
| | | | | CN | 108270504 | A | 10 July 2018 |
| US | 2018287725 | A1 | 04 October 2018 | US | 10615898 | B2 | 07 April 2020 |
| | | | | EP | 3382918 | A1 | 03 October 2018 |
| | | | | EP | 3382918 | B1 | 28 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310217122